# EUROPÄISCHE PATENTSCHRIFT

(11) **EP 3 153 345 B1**
(45) Veröffentlichungstag und Bekanntmachung des Hinweises auf die Patenterteilung: **03.10.2018**
(21) Anmeldenummer: 16450025.8
(22) Anmeldetag: 06.10.2016
(51) Int. Cl.: B60M 1/20

(54) **ANORDNUNG ZUM HALTEN DER AUS TRAGSEIL UND FAHRDRAHT BESTEHENDEN OBERLEITUNG ELEKTRISCHER SCHIENENFAHRZEUGE**
ARRANGEMENT FOR HOLDING A SUPPORTING ROPE AND WIRE IN ELECTRIC RAILWAY OVERHEAD LINE
SYSTEM DE MAINTIEN DE CORDE DE SUPPORT ET FILS POUR CATENAIRE

(30) Priorität: 08.10.2015 AT 6522015
(43) Veröffentlichungstag der Anmeldung: 12.04.2017
(73) Patentinhaber: Ing. Karl u. Albert Kruch GmbH & Co. KG, 1230 Wien (AT)
(72) Erfinder: Röhl, Jan, 2500 Siegenfeld (AT)
(74) Vertreter: Rippel, Andreas

(56) Entgegenhaltungen:
- EP-A1- 0 489 627
- WO-A1-2007/020297
- AT-A4- 515 083
- AT-B- 409 948
- FR-A- 449 505
- GB-A- 191 104 623

## Beschreibung

Die Erfindung bezieht sich auf eine Anordnung zum Halten der aus Tragseil und Fahrdraht bestehenden Oberleitung elektrischer Schienenfahrzeuge, mit einem Fahrleitungsmast, der Führungen für einen den Mast nach oben verlängernden Träger aufweist, wobei der Träger in den Führungen verschiebbar ist und einen die Oberleitung haltenden Ausleger trägt, der aus einer zu einer offenen Schleife geformten Stange besteht, deren Enden am Träger gelagert sind.

In der AT 515 083 A4 ist ein Fahrleitungsmast beschrieben, bei dem die Oberleitung von einem Z-Ausleger gehalten wird. Solche Z-Ausleger sind sehr störungsanfällig.

Der in der FR 449 505 A beschriebene Ausleger ist durch eine U-förmige Konstruktion versteift

WO 2007/020297 beschreibt eine Anordnung wobei ein Zick-Zack Verlauf der Oberleitung möglich ist.

Die Erfindung hat es sich zum Ziel gesetzt, eine sichere Anordnung zu schaffen, mit der auch ein Zick-Zack Verlauf der Oberleitung möglich ist.

Erreicht wird dies dadurch, daß die beiden einander gegenüberliegenden Abschnitte der Schleife durch eine Strebe miteinander verbunden sind, an deren oberem Teil das Tragseil und am unteren Teil der Fahrdraht gelagert ist, wobei die Strebe quer verschiebbar an der Schleife gelagert ist, wobei an der Strebe ein Seil angreift, über das die Strebe vom Boden aus verschiebbar ist.

Im Rahmen der Erfindung kann das Seil ein Endlosseil sein, das über zwei Umlenkrollen geführt ist.

Die Verdrehung der Umlenkrollen könnte z.B. durch einen Elektromotor erfolgen, der durch einen Schalter vom Boden aus betätigt werden kann.

Eine mechanische Betätigung kann bei einem bevorzugten Ausführungsbeispiel der Erfindung dadurch erfolgen, daß die dem Mast nähere Umlenkrolle mit einer weiteren Umlenkrolle verbunden ist, über die ein weiteres Endlosseil geführt ist, das über eine in Bodennähe angeordnete, vorzugsweise über eine Kurbel drehbare Umlenkrolle geschlungen ist.

Nachstehend ist die Erfindung an Hand eines in den Zeichnungen dargestellten Ausführungsbeispieles näher beschrieben, ohne auf dieses Beispiel beschränkt zu sein. Dabei zeigen:
Fig. 1 eine schaubildliehe Ansicht einer erfindungsgemäßen Anordnung;
Fig. 2 in vergrößertem Maßstab eine Teilansicht auf die Strebe.

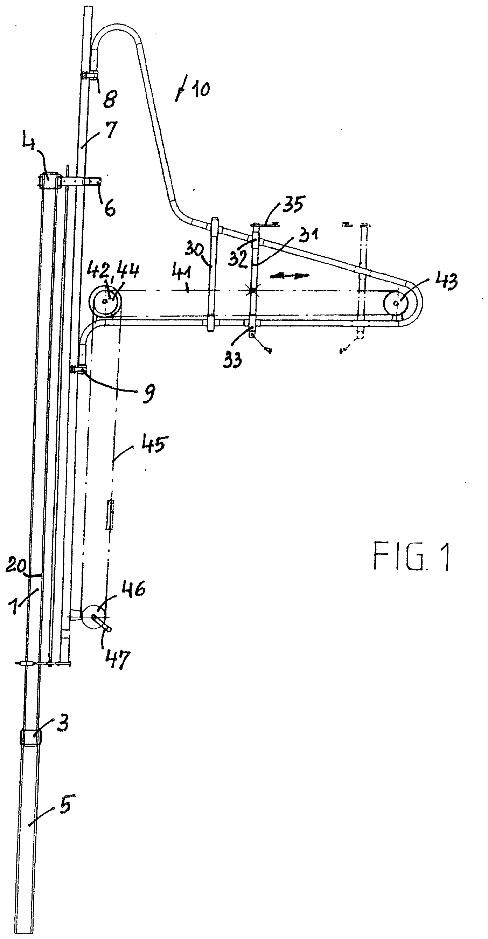

Ein erfindungsgemäßer Fahrleitungsmast weist zwei Formrohre, von denen in Fig. 1 nur das Formrohr 1 sichtbar ist, auf. Die parallelen Formrohre sind unten durch ein Verbindungsstück 3 und oben durch ein Verbindungsstück 4 miteinander verbunden. Am Verbindungsstück 3 ist ein Rohr 5 befestigt, das der Verankerung des Fahrmastes im Boden dient.

Am oberen Führungsstück 4 ist eine Führung 6 für einen Träger 7 befestigt, der in der Führung 6 lotrecht verschiebbar ist.

An dem aus GFK bestehenden Träger 7 sind bei 8 und 9 die Enden eines Auslegers 10 gelagert, der aus einer zu einer offenen Schleife geformten Stange besteht. Der Ausleger 10 trägt die Oberleitung, nämlich oben das Tragseil 11 und unten den Fahrdraht 12.

Die beiden gegenüberliegenden Abschnitte der Schleife des Auslegers 10 sind durch Streben 30, 31 miteinander verbunden. Die Strebe 31 ist verschiebbar an der Schleife gelagert. An der Strebe 31 sind das Tragseil 11 und der Fahrdraht befestigt.

Durch die Verschiebbarkeit der Strebe 31 ist es möglich, die Oberleitung Zick-Zack zu führen, wodurch ein gleichmäßigerer Verschleiß erreicht wird. In Fig. 1 ist dies angedeutet.

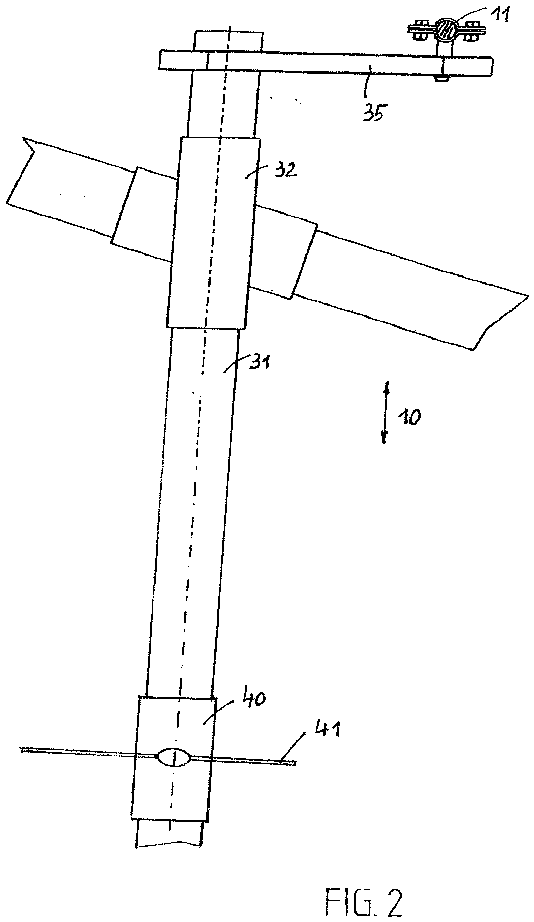

Aus den Fig. 1 und 2 ist ersichtlich, dass die Strebe 31 in Rohren 32, 33 verschiebbar gelagert ist.

Am oberen Ende der Strebe 31 ist ein Arm 35 befestigt, der das Tragseil 11 lagert. Bei einer Verschwenkung des Auslegers 10 wird das Tragseil 11 daher nicht verwürgt.

An der Strebe 31 ist ein Rohr 40 verschiebbar gelagert, an dem ein Endlosseil 41 befestigt ist, das über zwei Umlenkrollen 42,43 geführt ist. Mit der Umlenkrolle 42 ist gleichachsig eine weitere Umlenkrolle 44 verbunden, über die ein weiteres Endlosseil 45 geführt ist. Das Endlosseil 45 ist über eine in Bodennähe angeordnete Umlenkrolle 46 geschlungen, die mit einer Kurbel 47 versehen ist.

Durch Betätigung der Kurbel 47 wird die Umlenkrolle 46 verdreht, das dadurch bewegte Endlosseil 45 verdreht die Umlenkrolle 44, wodurch auch die auf der gleichen Achse sitzende Umlenkrolle 42 verdreht wird.

Dadurch wird das Endlosseil 41 bewegt, welches dabei die Strebe 31 mitnimmt, die in den einander gegenüberliegenden Abschnitten der Schleife geführt ist.

Im Rahmen der Erfindung sind zahlreiche Abänderungen möglich. So könnte, wie bereits ausgeführt wurde, die Betätigung der Umlenkrolle 42 über einen vom Boden aus gesteuerten Elektromotor erfolgen. Weiters könnte ein die Strebe verschiebbares Seil auch ein offenes Seil sein, dessen beide Enden zum Boden hin geführt werden, so dass durch Anziehen an einem der Enden die Strebe verschoben wird.

## Patentansprüche

1. Anordnung zum Halten der aus Tragseil (11) und Fahrdraht (12) bestehenden Oberleitung elektrischer Schienenfahrzeuge, mit einem Fahrleitungsmast (1, 2) der Führungen (6, 21) für einen den Mast nach oben verlängernden Träger aufweist, wobei der Träger (7) in den Führungen (6, 21) verschiebbar ist und einen die Oberleitung haltenden Ausleger (10) trägt, **dadurch gekennzeichnet, dass** der Ausleger (10) aus einer zu einer offenen Schleife geformten Stange besteht, deren Enden am Träger gelagert sind, und die beiden einander gegenüberliegenden Abschnitte der Schleife durch eine Strebe (31) miteinander verbunden sind, an deren oberem Teil das Tragseil (11) und am unteren Teil der Fahrdraht (12) gelagert ist, wobei die Strebe (31) quer verschiebbar an der Schleife (10) gelagert ist, wobei an der Strebe (31) ein Seil (41) angreift, über das die Strebe (31) vom Boden aus verschiebbar ist.

2. Anordnung nach Anspruch 1, **dadurch gekennzeichnet, daß** das Seil (41) ein Endlosseil ist, das über zwei Umlenkrollen (42, 43) geführt ist.

3. Anordnung nach Anspruch 2, **dadurch gekennzeichnet, daß** die dem Mast (1, 2) nähere Umlenkrolle (42) mit einer weiteren Umlenkrolle (44) verbunden ist, über die ein weiteres Endlosseil (45) geführt ist, daß über eine in Bodennähe angeordnete, vorzugsweise über eine Kurbel (47) drehbare Umlenkrolle (46) geschlungen ist.

## Claims

1. Device for holding the overhead wires, comprising a catenary wire (11) and contact wire (12), of electric railway vehicles, with an overhead wire mast (1, 2) which comprises guides (6, 21) for a support extending the mast upwards, wherein the support (7) is displaceable in the guides (6, 21) and bears an arm (10) holding the overhead wires, **characterised in that** the arm (10) comprises a rod shaped to form an open loop, the ends of which are borne on the support and the two opposite sections of the loop are connected to each other by a strut (31) on the upper part of which the catenary wire (11) and on the lower part of which the contact wire (12) is borne, wherein the strut (31) is held in a transversely displaceable manner on the loop (10), wherein a wire (41) contacts the strut (31) via which the strut (31) can be displaced from the ground.

2. Device according to claim 1 **characterised in that** the wire (41) is a continuous wire which is guided via two deflecting rollers (42, 43).

3. Device according to claim 2 **characterised in that** the deflecting roller (42) closer to the mast (1, 2) is connected to a further deflecting roller (44) via which a further continuous wire (45) is guided, which is slung over a deflecting roller (46) arranged close to the ground and is preferably rotatable via a crank (47) .

## Revendications

1. Agencement destiné à maintenir la ligne de contact composée d'un câble porteur (11) et d'un fil de contact (12) de véhicules ferroviaires électriques, avec un poteau support de caténaire (1, 2) qui comporte des glissières (6, 21) pour un support prolongeant le poteau vers le haut, le support (7) pouvant être déplacé dans les glissières (6, 21) et portant une console (10) maintenant la ligne de contact, **caractérisé en ce que** la console (10) est composée d'une perche formée en une boucle ouverte dont les extrémités sont logées sur le support, et les deux sections de la boucle opposées l'une à l'autre sont reliées entre elles par au moins une jambe de force (31), le câble porteur (11) étant logé sur la partie supérieure de celle-ci et le fil de contact (12) étant logé sur la partie inférieure, la jambe de force (31) étant logée sur la boucle (10) pouvant être déplacée transversalement, un câble (41) venant en prise sur la jambe de force (31) sur lequel la jambe de force (31) peut être déplacée depuis le sol.

2. Agencement selon la revendication 1, **caractérisé en ce que** le câble (41) est un câble sans fin, qui est guidé par le biais de deux rouleaux de renvoi (42, 43).

3. Agencement selon la revendication 2, **caractérisé en ce que** le rouleau de renvoi (42) plus rapproché du poteau (1, 2) est relié à un autre rouleau de renvoi (44) par le biais duquel est guidé un autre câble sans fin (45), qui est enroulé sur un rouleau de renvoi (46), disposé au niveau du sol, pouvant tourner de préférence sur une manivelle (47).
